# FASCICULE DE BREVET EUROPEEN

(11) **EP 3 367 353 B1**
(45) Date de publication et mention de la délivrance du brevet: **22.03.2023**
(21) Numéro de dépôt: 18159092.8
(22) Date de dépôt: 28.02.2018
(51) Int. Cl.: G08B 13/196, H04N 5/232, G06K 9/00

(54) **PROCÉDÉ DE PILOTAGE D'UNE CAMÉRA PTZ, PRODUIT PROGRAMME D'ORDINATEUR ET DISPOSITIF DE PILOTAGE ASSOCIÉS**
STEUERVERFAHREN FÜR EINE PTZ-KAMERA, ZUGEHÖRIGES COMPUTERPROGRAMM-PRODUKT UND STEUERVORRICHTUNG
CONTROL METHOD OF A PTZ CAMERA, ASSOCIATED COMPUTER PROGRAM PRODUCT AND CONTROL DEVICE

(30) Priorité: 28.02.2017 FR 1700197
(43) Date de publication de la demande: 29.08.2018
(73) Titulaire: THALES, 92400 Courbevoie (FR)
(72) Inventeur: GOUDOU, Jean-François, 91767 PALAISEAU CEDEX (FR); STOIAN, Andreï, 91767 PALAISEAU CEDEX (FR); CRAYE, Céline, 91767 PALAISEAU CEDEX (FR)
(74) Mandataire: Lavoix

(56) Documents cités:
- EP-A1- 2 945 366
- EP-A1- 3 070 643
- WO-A1-95/15542
- KR-B1- 101 480 636
- US-A1- 2012 148 160
- US-A1- 2013 342 700

## Description

La présente invention concerne un procédé de pilotage d'une caméra PTZ.

La présente invention concerne également un produit programme d'ordinateur et un dispositif de pilotage associés cette caméra.

Par caméra PTZ, on entend une caméra apte à régler de manière automatique ou quasi-automatique son orientation et son niveau d'agrandissement de la scène connu égale sous le terme « zoom ». Dans ce contexte, l'acronyme « PTZ » correspond aux trois mouvements caractérisant une telle caméra, à savoir faire un panoramique, incliner et agrandir ou zoomer (de l'anglais « pan », « tilt » et « zoom »). Une telle caméra est souvent utilisée dans la télésurveillance.

Différentes méthodes de pilotage d'une caméra PTZ existent dans l'état de la technique.

Certaines de ces méthodes consistent notamment à modifier périodiquement l'orientation de la caméra en mettant ainsi en ouvre un balayage homogène des scènes autour de la caméra.

Lors d'un tel balayage, lorsqu'il est nécessaire d'avoir plus de précisions sur une scène, un opérateur peut généralement intervenir pour piloter par exemple le zoom de la caméra manuellement.

Selon d'autres méthodes de pilotage connues, la caméra PTZ passe successivement par des positions d'observation déterminées préalablement par un opérateur, par exemple lors de l'installation de la caméra. Chaque position d'observation comprend l'orientation de la caméra ainsi que le niveau de son zoom.

Ces positions d'observation sont par exemple déterminées en fonction des objets fixes entourant la caméra ou encore en fonction des endroits dans lesquels des changements sont les plus attendus.

Les vues acquises par la caméra dans des différentes positions d'observation sont par exemple traitées postérieurement par l'opérateur.

Les méthodes existantes présentent toutefois un certain nombre d'inconvénients.

En particulier, durant le cycle de vie d'une caméra PTZ, il est souvent nécessaire de calibrer les positions d'observation prédéterminées afin de les adapter à chaque évolution de l'entourage de la caméra. Ceci nécessite alors des interventions régulières d'un opérateur de maintenance ce qui augmente fortement les coûts des installations correspondantes.

De plus, certaines positions d'observation présentent des zooms beaucoup trop importants de sorte que la caméra se concentre sur des détails de la scène mais ne donne pas sa vue en globalité. Or, il est souvent plus avantageux d'avoir une vue en globalité qu'une vue trop détaillée.

WO95/15542 A1 (ZOOM CITY PTY LTD [AU]; GILD ROBERT JOSEPH [AU]) 8 juin 1995 (1995-06-08) divulgue un système d'observation touristique à pièces ou à jetons - doté d'une caméra vidéo, d'un écran tactile et d'un système de contrôle permettant à l'utilisateur de faire fonctionner le système en mode automatique, semi-automatique ou manuel.

EP 3 070 643 A1 (THALES SA [FR]) 21 septembre 2016 (2016-09-21) divulgue une méthode de reconnaissance de par ex. objet, pendant la vidéosurveillance, implique l'orientation d'un dispositif d'acquisition d'images, l'acquisition d'un signal d'image numérique avec une résolution et la réalisation d'une classification d'objet d'une partie de scène à l'aide d'un signal d'image.

US 2013/342700 A1 (KASS AHARON [IL]) 26 décembre 2013 (2013-12-26) divulgue du système d'utilisation de correspondance de motifs pour déterminer la présence d'un objet désigné dans des images numériques, comprenant une caméra configurée pour enregistrer un événement qui se produit et un processeur pour sélectionner une action à effectuer lors de la détermination de la présence d'un objet désigné.

US 2012/148160 A1 (SWAMINATHAN GURUMURTHY [IN] ET AL) 14 juin 2012 (2012-06-14) divulgue une méthode de détection de points de repère, par ex. yeux d'individus entrant dans une installation de construction, implique l'utilisation d'un classificateur en cascade et fort pour déterminer les emplacements des repères faciaux identifiés à l'aide des dimensions du visage de l'image.

KR 101 480 636 B1 (S 1 CORP [KR]) 9 janvier 2015 (2015-01-09) divulgue un procédé de surveillance pour dispositif de surveillance vidéo, consistant à re-photographier une région de surveillance et à entrer des données de phase d'apprentissage d'un objet de surveillance dans une machine de classification, où un créneau de données pour un objet de surveillance est démarré.

EP 2 945 366 A1 (SONY CORP [JP]) 18 novembre 2015 (2015-11-18) divulgue du appareil de traitement d'image utilisé par ex. appareil photo numérique, doté d'une unité principale de détermination d'objet à photographier pour déterminer les principaux objets à photographier sur la base de la tendance de contact/séparation de l'objet à photographier.

La présente invention a pour but de proposer un procédé de pilotage d'une caméra PTZ permettant d'éviter la nécessité de calibrage de positions d'observation tout en assurant une surveillance performante.

De plus, le procédé de pilotage selon l'invention permet d'adapter mieux le zoom choisi dans différentes positions d'observation pour éviter les pertes de la globalité de la vue.

À cet effet, l'invention a pour objet un procédé de pilotage d'une caméra PTZ conforme à la revendication 1

Suivant d'autres aspects avantageux de l'invention, le procédé de pilotage comprend une ou plusieurs des caractéristiques des revendications 2 à 6.

L'invention a également pour objet un produit programme d'ordinateur comportant des instructions logicielles qui, lorsque mis en oeuvre par un équipement informatique, met en oeuvre le procédé tel que défini ci-dessus.

L'invention a également pour objet un dispositif de pilotage mettant en oeuvre le procédé tel que défini ci-dessus.

Finalement, l'invention a pour objet une caméra PTZ conforme à la revendication 9.

Ces caractéristiques et avantages de l'invention apparaîtront à la lecture de la description qui va suivre, donnée uniquement à titre d'exemple non limitatif, et faite en référence aux dessins annexés, sur lesquels :
- la figure 1 est une vue schématique d'une caméra PTZ selon l'invention, la caméra comportant notamment un dispositif de pilotage selon l'invention ;
- la figure 2 est une vue schématique du dispositif de pilotage de la figure 1 ; et
- la figure 3 est un organigramme d'un procédé de pilotage selon l'invention, le procédé étant mis en oeuvre par le dispositif de pilotage de la figure 1.

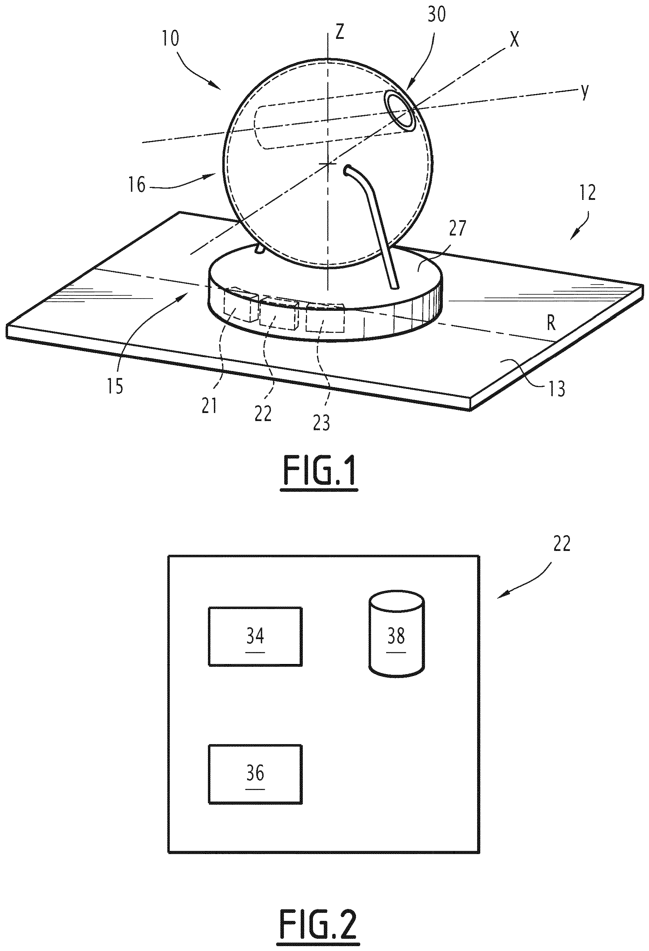

La caméra 10 de la figure 1 est une caméra PTZ utilisable notamment dans le domaine de télésurveillance pour observer une pluralité d'objets intérêt.

Par objet d'intérêt, on comprend tout objet présentant un intérêt quelconque pour la télésurveillance.

Ainsi, par exemple, un tel objet d'intérêt comprend un être vivant tel qu'un animal ou une personne, un objet au moins partiellement mobile tel qu'un véhicule ou tout autre engin apte à se déplacer dans l'espace, ou encore un objet sensiblement statique mais présentant une certaine évolution dans le temps tel qu'une plante.

La caméra 10 est disposée par exemple de manière fixe sur un support 12 présentant au moins localement un plan de support 13 disposé par exemple horizontalement.

Bien entendu, le support 12 peut présenter toute autre forme et disposition adaptées pour fixer la caméra 10 selon des méthodes connues en soi.

Comme cela est illustré sur la figure 1, la caméra 12 comprend une partie fixe 15 fixé au plan de support 13 et une partie mobile 16.

La partie fixe 15 présente un boitier par exemple de forme cylindrique comprenant un dispositif de motorisation 21 de la partie mobile 16, un dispositif de pilotage 22 et un dispositif de communication externe 23.

La partie fixe 15 comprend en outre des moyens de support 27 nécessaires pour assurer la rotation de la partie mobile 16 comme cela sera expliqué par la suite. Ces moyens de support 27 font par exemple saillie par rapport au boitier cylindrique.

La partie mobile 16 présente un boitier par exemple de forme sphérique comprenant un dispositif de prise de vues 30 intégré de manière fixe dans ce boitier.

La partie mobile 16 est montée rotative sur les moyens de support 27 de la partie fixe 15, autour d'un premier axe Z perpendiculaire au plan de support 13 et autour d'un deuxième axe X parallèle au plan de support 13.

Le dispositif de prise de vues 30 comprend un élément optique et un élément de traitement de signaux issus de l'élément optique.

L'élément optique est par exemple un objectif à focale variable. De manière connue soi, un tel objectif définit un champ de vision de la caméra 10.

En particulier, l'élément optique du dispositif de prise de vues 30 définit un axe de prise de vues Y qui est, dans l'exemple décrit, perpendiculaire au deuxième axe X et traverse le plan de support 13. L'angle formé entre l'axe de prise de vues Y et le plan de support 13 est dénoté par la suite par le terme « angle d'inclinaison » de la caméra 10.

En outre, en projection sur le plan de support 13, l'angle formé entre la projection de l'axe de prise de vues Y et un axe de référence R compris dans ce plan et traversant le premier axe Z est dénoté par la suite par le terme « angle d'azimut » de la caméra 10.

Ainsi, la rotation de la partie mobile 16 de la caméra 10 autour du deuxième axe X implique un changement de l'angle d'inclinaison de la caméra 10 qui est variable par exemple entre -90° et +90°.

La rotation de la partie mobile 16 de la caméra 10 autour du premier axe Z implique un changement de l'angle d'azimut de la caméra 10 qui est variable par exemple entre 0° et 360°.

Les angles d'inclinaison et d'azimut de la caméra 10 définissent donc son orientation dans l'espace.

L'élément optique du dispositif de prise de vues 30 définit en outre un niveau d'agrandissement de la scène qui est connu également sous le terme « zoom ». Ce niveau est variable par exemple par des moyens de motorisation prévus à cet effet dans le dispositif de prise de vues 30.

L'élément de traitement est raccordé directement à l'élément d'optique et permet de reconstituer un flux vidéo à partir des signaux issus de l'élément optique selon des méthodes connues en soi.

Le dispositif de prise de vues 30 est raccordé au dispositif de communication externe 23 et au dispositif de pilotage 22.

Ainsi, le dispositif de communication externe 23 est apte à recevoir le flux vidéo généré par le dispositif de prise de vues 30 et à le transmettre vers des moyens de traitement externes via par exemple des moyens de transmission filaires ou sans fil. Les moyens de traitement externes présentent par exemple des moyens de visualisation du flux vidéo ou des moyens d'enregistrement de ce flux.

Le dispositif de motorisation 21 est présenté par exemple par un ou plusieurs moteurs électriques aptes à animer d'un mouvement rotatif la partie mobile 16 autour du premier axe Z et du deuxième axe X.

Le dispositif de pilotage 22 est apte à recevoir le flux vidéo transmis par le dispositif de prise de vues 30 et à piloter le fonctionnement de la caméra 10 et notamment le fonctionnement du dispositif de motorisation 21 et du dispositif de prise de vues 30.

Ainsi, en relation avec le dispositif de prise de vues 30, le dispositif de pilotage 22 est apte à commander l'activation ou la désactivation du fonctionnement de ce dispositif de prise de vues 30. Il est apte en outre à commander un changement du niveau d'agrandissement donné par ce dispositif 30.

En relation avec le dispositif de motorisation 21, le dispositif de pilotage 22 est apte à commander l'activation ou la désactivation du ou des moteurs électriques correspondants pour faire tourner la partie mobile 16 autour du premier axe Z et/ou autour du deuxième axe Y.

Par pilotage du niveau d'agrandissement et de l'orientation de la caméra 10, le dispositif de pilotage 22 permet de régler la caméra 10 en définissant une position d'observation de la caméra 10.

Ainsi, par position d'observation, on comprend l'orientation de la caméra 10, c'est-à-dire son angle d'inclinaison et son angle d'azimut, et le niveau d'agrandissement donné par le dispositif de prise de vues 30.

Chaque position d'observation définit ainsi un champ de vision de la caméra 10. Différentes positions d'observation correspondent alors à des différents champs de vision.

Le dispositif de pilotage 22 est illustré plus en détail sur la figure 2.

Ainsi, en référence à cette figure 2, le dispositif de pilotage 22 comprend un module d'apprentissage 34, un module de surveillance 36 et une base de données 38.

Les modules d'apprentissage 34 et de surveillance 36 présentent par exemple des circuits électroniques programmables qui sont programmés de sorte à mettre en oeuvre respectivement une phase d'apprentissage PA et une phase de surveillance PS d'un procédé de pilotage qui sera expliqué plus en détail par la suite.

Selon un autre exemple de réalisation, les modules d'apprentissage 34 et de surveillance 36 présentent des logiciels mettant en oeuvre respectivement la phase d'apprentissage PA et la phase de surveillance PS. Ces logiciels sont stockés dans une mémoire prévue à cet effet dans le dispositif de pilotage 22 et sont exécutables par un processeur également prévu à cet effet dans le dispositif de pilotage 22.

La base de données 38 présente une mémoire prévue à cet effet dans le dispositif de pilotage 22 et apte à stocker une liste de réglages comme cela sera expliqué par la suite.

Selon un exemple de réalisation, le dispositif de pilotage 22 n'est pas intégré dans la caméra 10 mais se présente sous la forme d'un module distant qui communique avec la caméra 10 par exemple via le dispositif de communication externe 23.

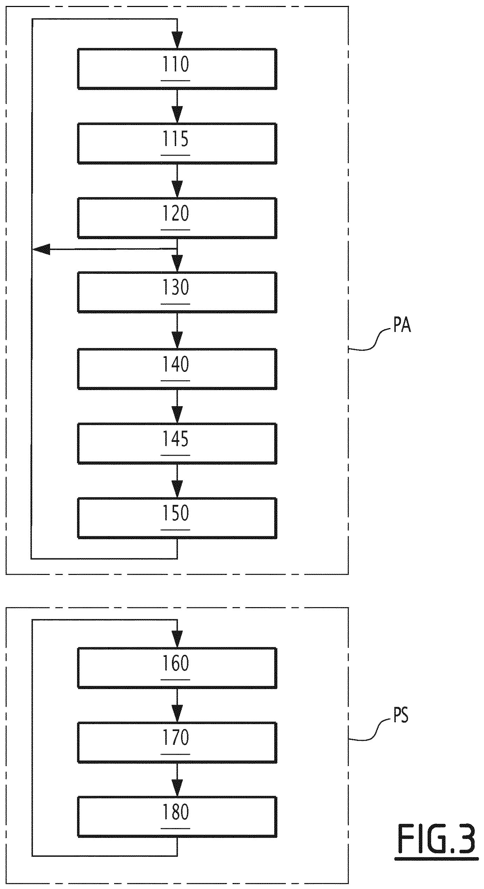

Le procédé de pilotage de la caméra 10 selon l'invention sera désormais expliqué en référence à la figure 3 présentant un organigramme de ses étapes.

Ainsi, comme cela a été mentionné précédemment, le procédé de pilotage comprend une phase d'apprentissage PA et une phase de surveillance PS. La phase d'apprentissage PA est mise en oeuvre au moins une fois avant la mise en oeuvre de la phase de surveillance PS.

En particulier, la phase d'apprentissage PA permet d'établir dynamiquement la liste de réglages en fonction d'objets d'intérêt présents dans différents champs de vision de la caméra 10.

Lors d'une étape initiale 110 de la phase d'apprentissage PA, le module d'apprentissage 34 commande un balayage de différents champs de vision de la caméra 10.

Par balayage, on comprend notamment une prise de vues par le dispositif de prise de vues 30 dans différentes positions d'observation de la caméra 10. Chaque changement d'une position d'observation est commandé par exemple en modifiant l'angle d'inclinaison de la caméra 10 et/ou son angle d'azimut et/ou le niveau d'agrandissement.

Lors d'un tel balayage, le module d'apprentissage 10 reçoit le flux vidéo généré par le dispositif de prise de vues 30 et met oeuvre la détection d'objets d'intérêt selon des méthodes connues en soi.

Ainsi, par exemple, ces méthodes consistent à reconnaître un objet d'intérêt en analysant des caractéristiques prédéterminées de cet objet ou des champs de vision balayés par la caméra 12.

Les caractéristiques prédéterminées comprennent par exemple des formes ou des textures attendues de l'objet d'intérêt et/ou de son entourage. Ces méthodes permettent par exemple de reconnaitre une personne en détectant son visage ou d'autres parties de son corps ayant des formes prédéterminées.

Lorsque le module d'apprentissage 34 détecte un objet d'intérêt, il met en oeuvre l'étape 120 suivante.

Lors de cette étape 120, le module d'apprentissage 34 détermine la position d'observation définissant le champ de vision comportant l'objet d'intérêt détecté.

Selon une variante de réalisation, la phase d'apprentissage PA comprend en outre une étape 115 d'optimisation du champ de vision comprenant l'objet d'intérêt détecté qui est mise en oeuvre après l'étape 110 et avant l'étape 120.

Lors de cette étape 115, le module d'apprentissage 34 adapte le champ de vision de l'objet d'intérêt détecté lors de l'étape 110 pour par exemple mieux voir cet objet d'intérêt ou son entourage.

En particulier, le module d'apprentissage 34 adapte ce champ de vision en réglant le niveau d'agrandissement et/ou l'orientation de la caméra 10 en fonction par exemple d'au moins certaines caractéristiques prédéterminées de l'objet d'intérêt.

Comme dans le cas précédent, les caractéristiques prédéterminées comprennent par exemple des formes ou des textures attendues de l'objet d'intérêt et/ou de son entourage.

Le module d'apprentissage 34 obtient ainsi un champ de vision optimal comportant l'objet d'intérêt.

Le champ de vision optimal obtenu comprend par exemple outre l'objet d'intérêt détecté lors de l'étape 110, un autre objet d'intérêt non-visible ou peu visible dans le champ de vision initial. Dans ce cas, lors de l'étape 115, le module d'apprentissage 34 règle de manière appropriée le niveau d'agrandissement afin que le champ de vision optimal comprenne les deux objets d'intérêt.

Selon un autre exemple, le champ de vision optimal comprend uniquement l'objet d'intérêt détecté lors de l'étape 110 avec un niveau d'agrandissement optimal. Ce niveau d'agrandissement optimal permet par exemple de voir en détail cet objet d'intérêt.

Si l'étape 115 a été mise en oeuvre, lors de l'étape 120, le module d'apprentissage 34 détermine la position d'observation définissant le champ de vision optimal.

Lors de l'étape 130 suivante, le module d'apprentissage 34 stocke la position d'observation déterminée dans la liste de réglages par exemple sous la forme de trois valeurs numériques définissant les angles d'inclinaison et d'azimut de la caméra 10 ainsi que le niveau d'agrandissement donné par le dispositif de prise de vues 30.

Les étapes 140 à 150 suivantes sont mises en oeuvre de manière facultative.

Ainsi, lors de l'étape 140, le module d'apprentissage 34 détermine un contexte local associé à l'objet d'intérêt détecté.

Par contexte local, on comprend toute information permettant de caractériser la détection de l'objet d'intérêt.

Ainsi, par exemple, le contexte local correspond à l'heure de la détection de l'objet d'intérêt.

Selon un autre exemple, le contexte local correspond à l'heure de la détection de l'objet d'intérêt avec au moins un autre objet d'intérêt.

Lors de l'étape 145 suivante, le module d'apprentissage 34 associe le contexte local déterminé à la position d'observation correspondant à l'objet détecté.

Lors de l'étape 150 suivante, le module d'apprentissage 34 stocke le contexte local déterminé dans la liste de réglages avec la position d'observation correspondante.

À la fin de l'étape 150 ou de l'étape 130, le module d'apprentissage passe à nouveau à l'exécution de l'étape 110. Ainsi, les étapes 110 à 130 ou les étapes 110 à 150 sont réitérées par exemple jusqu'à ce qu'un nombre d'itérations maximal prédéterminé ne soit atteint ou jusqu'à l'expiration d'un intervalle temporel prédéterminé.

La phase de surveillance PS est mise en oeuvre par la suite.

Plusieurs variantes de la mise en oeuvre de la phase de surveillance PS sont possibles.

Ainsi, selon une première variante de réalisation qui est mise en oeuvre lorsque notamment les étapes 140 à 150 de la phase d'apprentissage PA n'ont pas été exécutées, lors de l'étape initiale 160 de la phase de surveillance, le module de surveillance 36 parcourt toutes les positions d'observation comprises dans la liste de réglages.

L'ordre d'un tel parcours est défini par exemple par l'ordre d'écriture des positions d'observation dans cette liste.

Selon un autre exemple de réalisation, l'ordre de parcours est défini par toute autre règle prédéterminée permettant par exemple d'optimiser le temps de parcours.

Puis, pour chaque position d'observation parcourue, le module de surveillance 36 met oeuvre l'étape 170 lors de laquelle, il commande le dispositif de motorisation 21 et le dispositif de prise de vues 30 pour régler la caméra 10 selon cette position d'observation.

Puis, lors de l'étape 180 suivante, le module de surveillance 36 commande la prise de vues par le dispositif de prise de vues 30 jusqu'à ce qu'un critère d'arrêt prédéterminé ne soit rempli.

Le critère d'arrêt est basé par exemple sur le temps écoulé depuis le début de l'étape 180 ou sur le contenu du flux vidéo fourni.

Ainsi, par exemple, le critère d'arrêt est rempli à l'expiration d'un intervalle temporel prédéterminé ou en l'absence de mouvement significatif dans le champ de vision correspondant.

Puis, le module de surveillance revient à l'étape 160 pour passer par exemple à une autre position d'observation.

Selon une deuxième variante de réalisation de la phase de surveillance PS qui est mise en oeuvre lorsque les étapes 140 à 150 de la phase d'apprentissage PA ont été exécutées, lors de l'étape initiale 160 de la phase de surveillance PS, le module de surveillance 36 met en oeuvre l'observation du contexte local.

Lorsque ce contexte local correspond à l'un des contextes locaux stockés dans la liste de réglages, le module de surveillance 36 détermine la position d'observation correspondant à ce contexte local.

Autrement dit, lorsque l'un des contextes locaux stockés dans la liste de réglages se répète, le module de surveillance 36 détermine la position d'observation correspondant à ce contexte local.

Ainsi, par exemple, lorsqu'un contexte local stocké correspond à une heure précise de la journée, le module de surveillance 36 détecte une répétition de ce contexte local à la même heure tous les jours.

Bien entendu, nombreux autre exemples de contextes locaux et de conditions de leur répétition, sont également possibles.

De plus, il est possible d'adapter le module de surveillance 36 pour prédire une répétition d'un contexte local. Cela permet alors de régler la caméra 10 avant que le contexte local se répète effectivement. Ainsi, par exemple, lorsqu'un contexte local stocké correspond à une heure précise de la journée, le module de surveillance 36 prédit une répétition de ce contexte local quelques minutes ou secondes avant.

Puis, pour la position d'observation correspondant au contexte local détecté ou prédit, le module de surveillance 36 met en oeuvre les étapes 170 et 180 comme cela a été décrit précédemment.

Il doit être par ailleurs compris que les phases d'apprentissage PA et de surveillance PS peuvent être mises en oeuvre de manière parallèle après que la phase d'apprentissage PA a été mise en oeuvre au moins une fois.

En effet, dans ce cas, l'étape de balayage 110 de la phase d'apprentissage PA est par exemple mise en oeuvre en même temps que l'étape 180 de prise de vues de la phase de surveillance PS.

La mise en oeuvre des autres étapes peut être effectuée de manière sensiblement indépendante par le module d'apprentissage 34 et le module de surveillance 36.

On conçoit alors que la présente invention présente un certain nombre d'avantages.

Tout d'abord, le procédé selon l'invention propose de mettre en oeuvre une phase d'apprentissage ce qui permet de déterminer des positions d'observation de manière dynamique. Ceci évite alors la nécessité de calibrer ces positions d'observation avec le temps et diminue ainsi les coûts de maintien des installations correspondantes.

En outre, la mise en oeuvre parallèle des phases d'apprentissage et de surveillance permettent de maintenir une bonne qualité d'apprentissage tout en gardant la caméra opérationnelle.

Finalement, l'apprentissage permet d'adapter au mieux le niveau d'agrandissement à l'entourage de la caméra. Notamment, le procédé selon l'invention permet de créer une liste de réglages comprenant non-seulement différentes orientations de la caméra mais également différents niveaux d'agrandissement en fonction des caractéristiques particulières des objets d'intérêt ou de leur entourage. Ceci permet d'éviter les pertes d'informations dues par exemple à un zoom trop important sur un seul objet d'intérêt ce qui rend alors le comportement dynamique de la caméra plus efficace.

## Revendications

1. Procédé de pilotage d'une caméra PTZ (10) comportant un dispositif de prise de vues (30) réglable selon une pluralité de positions d'observation issues d'une liste de réglages, chaque position d'observation définissant un champ de vision de la caméra (10), le procédé comprenant une phase de surveillance (PS) comportant les étapes suivantes :
- réglage (170) du dispositif de prise de vues (30) selon l'une des positions d'observation issue de la liste de réglages ;
- prise de vues (180) du champ d'observation correspondant à la position d'observation selon laquelle le dispositif de prise de vues (30) est réglé ;
le procédé comprend en outre une phase d'apprentissage (PA) mise en oeuvre au moins une fois avant la phase de surveillance (PS) et comprenant l'établissement dynamique de la liste de réglages en fonction d'objets d'intérêt présents dans différents champs de vision de la caméra (10) ;
le procédé étant **caractérisé en ce que** la phase d'apprentissage (PA) comprenne les étapes suivantes :
- détection (110) d'un objet d'intérêt, l'objet d'intérêt étant au moins partiellement mobile ;
- détermination (120) de la position d'observation définissant le champ de vision comportant l'objet d'intérêt détecté ;
- mémorisation (130) de la position d'observation dans la liste de réglages ;
- détermination (140) d'un contexte local associé à l'objet d'intérêt détecté, le contexte local correspondant à l'heure de la détection de l'objet d'intérêt ou à l'heure de la détection de l'objet d'intérêt avec au moins un autre objet d'intérêt ;
- association (145) du contexte local à la position d'observation correspondant à l'objet détecté ;
- mémorisation (150) du contexte local dans la liste de réglages,
dans lequel la phase de surveillance (PS) comporte en outre l'étape de détection ou de prédiction (160) d'une répétition de l'un des contextes locaux mémorisés dans la liste de réglages, l'étape de réglage (170) du dispositif de prise de vues (30) étant mise en oeuvre pour la position d'observation associée à ce contexte local.

2. Procédé selon la revendication 1, dans lequel la phase d'apprentissage (PA) comprend en outre une étape (115) d'optimisation du champ de vision comprenant l'objet d'intérêt détecté, pour obtenir un champ de vision optimisé, dans laquelle le niveau d'agrandissement et/ou l'orientation de la caméra PTZ (10) est réglé en fonction d'au moins certaines caractéristiques prédéterminées de l'objet d'intérêt ;
l'étape de détermination (120) de la position d'observation comprenant la détermination de la position d'observation définissant le champ de vision optimisé.

3. Procédé selon l'une quelconque des revendications précédentes, dans lequel les phases d'apprentissage (PA) et de surveillance (PS) sont mises en oeuvre en parallèle lorsque la phase d'apprentissage (PA) a été mise en oeuvre au moins une fois avant la phase de surveillance (PS).

4. Procédé selon l'une quelconque des revendications précédentes, dans lequel lors de la phase de surveillance (PS), l'étape (180) de prise de vues du champ d'observation correspondant est mise en oeuvre jusqu'à ce qu'un critère d'arrêt ne soit rempli.

5. Procédé selon la revendication 4, dans lequel le critère d'arrêt est rempli à l'expiration d'un intervalle temporel prédéterminé ou en l'absence de mouvement significatif dans le champ de vision correspondant.

6. Procédé selon l'une quelconque des revendications précédentes, dans lequel chaque position d'observation comprend l'orientation du dispositif de prise de vues (30) et le niveau d'agrandissement donné par ce dispositif (30).

7. Produit programme d'ordinateur comportant des instructions logicielles qui, lorsque mis en oeuvre par un équipement informatique d'un dispositif de pilotage d'une caméra PTZ selon la revendication 8, met en oeuvre le procédé selon l'une quelconque des revendications précédentes.

8. Dispositif de pilotage (22) d'une caméra PTZ (10) mettant en oeuvre le procédé selon l'une quelconque des revendications 1 à 6.

9. Caméra PTZ (10) comportant un dispositif de prise de vues (30) réglable selon une pluralité de positions d'observation issues d'une liste de réglages et un dispositif de pilotage (22) selon la revendication 8.

## Patentansprüche

1. Steuerungsverfahren einer PTZ-Kamera (10), umfassend eine Ansichtaufnahmevorrichtung (30), die gemäß einer Vielzahl von Beobachtungspositionen aus einer Einstellungsliste einstellbar ist, wobei jede Beobachtungsposition ein Sichtfeld der Kamera (10) definiert, das Verfahren umfassend eine Überwachungsphase (PS) umfassend die folgenden Schritte:
- Einstellen (170) der Ansichtaufnahmevorrichtung (30) gemäß einer der Beobachtungspositionen aus der Einstellungsliste;
- Aufnehmen von Ansichten (180) des Beobachtungsfelds, das der Beobachtungsposition entspricht, auf die die Ansichtaufnahmevorrichtung (30) eingestellt ist;
das Verfahren ferner umfassend eine Lernphase (PA), die mindestens einmal vor der Überwachungsphase (PS) durchgeführt wird und die dynamische Erstellung der Einstellungsliste abhängig von Objekten von Interesse umfasst, die in verschiedenen Sichtfeldern der Kamera (10) vorhanden sind;
wobei das Verfahren **dadurch gekennzeichnet ist, dass** die Lernphase (PA) die folgenden Schritte umfasst:
- Erfassen (110) eines Objekts von Interesse, wobei das Objekt von Interesse zumindest teilweise beweglich ist;
- Bestimmen (120) der Beobachtungsposition, die das Sichtfeld umfassend das erfasste Objekt von Interesse umfasst;
- Speichern (130) der Beobachtungsposition in der Einstellungsliste;
- Bestimmen (140) eines lokalen Kontexts, der mit dem erfassten Objekt von Interesse assoziiert ist, wobei der lokale Kontext der Uhrzeit der Erfassung des Objekts von Interesse oder der Uhrzeit der Erfassung des Objekts von Interesse mit mindestens einem anderen Objekt von Interesse entspricht;
- Assoziieren (145) des lokalen Kontexts mit der Beobachtungsposition, die dem erfassten Objekt entspricht;
- Speichern (150) des lokalen Kontexts in der Einstellungsliste,
wobei die Beobachtungsphase (PS) ferner den Schritt eines Erfassens oder Vorhersagens (160) einer Wiederholung eines der in der Einstellungsliste gespeicherten lokalen Kontexte umfasst, wobei der Schritt des Einstellens (170) der Ansichtaufnahmevorrichtung (30) für die diesem lokalen Kontext zugeordnete Beobachtungsposition durchgeführt wird.

2. Verfahren nach Anspruch 1, wobei die Lernphase (PA) ferner einen Schritt (115) eines Optimierens des Sichtfelds umfasst, das das erfasste Objekt von Interesse umfasst, um ein optimiertes Sichtfeld zu erlangen, wobei der Vergrößerungsgrad und/oder die Ausrichtung der PTZ-Kamera (10) abhängig von mindestens einigen vorbestimmten Merkmalen des Objekts von Interesse eingestellt wird;
wobei der Schritt eines Bestimmens (120) der Betrachtungsposition das Bestimmen der Betrachtungsposition umfasst, die das optimierte Sichtfeld definiert.

3. Verfahren nach einem der vorherigen Ansprüche, wobei die Lernphase (PA) und die Überwachungsphase (PS) parallel durchgeführt werden, wenn die Lernphase (PA) mindestens einmal vor der Überwachungsphase (PS) durchgeführt wurde.

4. Verfahren nach einem der vorherigen Ansprüche, wobei in der Überwachungsphase (PS) der Schritt (180) eines Aufnehmens von Ansichten des entsprechenden Beobachtungsfelds so lange durchgeführt wird, bis ein Abbruchkriterium nicht mehr erfüllt ist.

5. Verfahren nach Anspruch 4, wobei das Abbruchkriterium nach Ablauf eines vorbestimmten Zeitintervalls oder bei Ausbleiben einer signifikanten Bewegung in dem entsprechenden Sichtfeld erfüllt wird.

6. Verfahren nach einem der vorherigen Ansprüche, wobei jede Beobachtungsposition die Ausrichtung der Ansichtaufnahmevorrichtung (30) und den durch diese Vorrichtung (30) gegebenen Vergrößerungsgrad umfasst.

7. Computerprogrammprodukt, umfassend Softwareanweisungen, die, wenn sie von einer Rechenausrüstung einer Steuervorrichtung einer PTZ-Kamera gemäß Anspruch 8 durchgeführt werden, das Verfahren nach einem der vorherigen Ansprüche durchführen.

8. Steuervorrichtung (22) einer PTZ-Kamera (10), die das Verfahren nach einem der Ansprüche 1 bis 6 durchführt.

9. PTZ-Kamera (10), umfassend eine Aufnahmevorrichtung (30), die gemäß einer Vielzahl von Beobachtungspositionen aus einer Einstellungsliste einstellbar ist, und eine Steuervorrichtung (22) nach Anspruch 8.

## Claims

1. Method for controlling a PTZ camera (10) comprising an image recording device (30) adjustable according to a plurality of observation positions issued from a list of settings, each observation position defining afield of view of the camera (10), the method comprising a surveillance phase (PS) comprising the following steps:
- adjusting (170) of the image recording device (30) according to one of the observation positions from the list of settings;
- image capturing (180) of the field of view corresponding to the observation position for which the image recording device (30) is set;
the method further comprises a learning phase (PA) implemented at least once before the surveillance phase (PS), and comprises the dynamic establishment of the list of settings as a function of objects of interest presented in various fields of view of the camera (10);
the method being **characterized in that** the learning phase (PA) comprises the following steps:
- detection (110) of an object of interest, the objet of interest being at least partially mobile;
- determination (120) of the observation position defining the field of view comprising the detected object of interest;
- storing (130) the observation position in the list of settings
- determination (140) of a local context associated with the detected object of interest, the local context corresponding to the time of detection of the object of interest or to the time of detection of the object of interest with at least one other object of interest;
- association (145) of the local context with the observation position corresponding to the detected object;
- storing (150) the local context in the list of settings
wherein the surveillance phase (PS) further comprises the step (160) of detecting or predicting a repetition of one of the local contexts stored in the list of settings, the setting step (170) of the image recording device (30) being implemented for the observation position associated with this local context.

2. Method according to claim 1, wherein the learning phase (PA) further comprises a step (115) for optimizing the field of view including the detected object of interest, in order to obtain an optimized field of view;
the step of determination (120) of the observation position comprising determining the observation position defining the optimized field of view.

3. Method according to any one of the preceding claims, wherein the learning phase (PA) and surveillance phase (PS) are implemented in parallel when the learning phase (PA) has been implemented at least once before the surveillance phase (PS).

4. Method according to any of the preceding claims, wherein during the surveillance phase (PS), the step (180) of image capturing the corresponding field of view is implemented until a stop criterion is fulfilled.

5. Method according to claim 6, wherein the stopping criterion is fulfilled at the expiration of a predetermined time interval, or in the absence of significant movement in the corresponding field of view.

6. Method according to any one of the preceding claims, wherein each observation position comprises the orientation of the image recording device (30) and the zoom level given by this device (30).

7. Computer program product comprising software instructions which, when implemented by computer equipment of a control device of a PTZ camera according to claim 8, implements the method according to any one of the preceding claims.

8. Control device (22) of a PTZ camera (10) implementing the method according to any one of the claims 1 to 6.

9. A PTZ camera (10) comprising an adjustable image recording device (30) according to a plurality of observation positions issued from a list of settings and a control device (22) according to claim 8.
